# EUROPEAN PATENT APPLICATION

(11) **EP 0 782 358 A2**
(43) Date of publication of application: **02.07.1997**
(21) Application number: 96309117.8
(22) Date of filing: 13.12.1996
(51) Int. Cl.: H04Q 7/32

(54) **Mobile communicator**

(30) Priority: 29.12.1995 US 581285
(71) Applicant: Lucent Technologies Inc., Murray Hill, New Jersey 07974-0636 (US)
(72) Inventor: Mobin, Mohammad Shafiul, Whitehall, Pennsylvania 18052 (US); Rehberg, John T., Orefield, Pennsylvania 18069 (US)
(74) Representative: Buckley, Christopher Simon Thirsk

(57) **Abstract**

A mobile telephone having a detachable memory (25, 31, 23, 27, 29) is disclosed. The memory contains information which enables the radio to operate in various cellular environments.

## Description

### Technical Field

This invention relates to communication devices in general and particularly to communication devices such as mobile cellular telephones.

### Background of the Invention

Mobile communication devices such as telephones, radios, and personal communicators have become increasingly popular throughout the world. Unfortunately, countries throughout the world do not utilize the same cellular standards. The GSM standard, currently under implementation in Europe, is incompatible with the IS-54. system being implemented in the United States. Thus for example, a person who purchases a cellular telephone designed to operate in accordance with the GSM standard in Europe may be severely disappointed when he travels to the United States to find that his cellular telephone does not operate in the United States. Communication standards are different in Japan. Consequently, phones suitable for use in either the United States or Europe may not function properly in Japan. As the cellular industry expands, other countries may adopt equally incompatible cellular standards.

There is a need for a universal communication device which may be used throughout the world and which in capable of providing adequate communication in a variety of standards environments.

### Summary of the Invention

These concerns are addressed by a communication apparatus having a programmable memory means or a receptacle for receiving a memory storage means which contains information appropriate to a predetermined standard.

### Brief Description of the Drawing

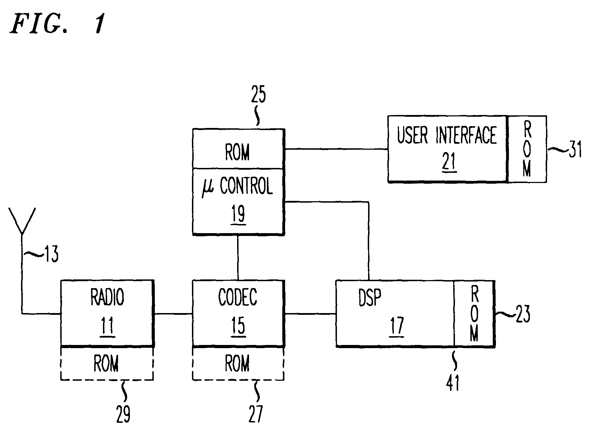

FIG. 1 is a block diagram useful in understanding an illustrative embodiment of the present invention.

### Detailed Description

Fig. 1 is a block diagram depicting the major portion of cellular communication device. Antenna 13 is connected to radio 11. Radio 11 functions to convert RF frequencies to base band and vice versa. CODEC 15 performs (digital to analog) and (analog to digital) conversion together with appropriate filtering. Digital signal processor 17 performs encoding and decoding of digital signals. Microcontroller 19 governs the functions of CODEC 15 and DSP 17 in response to commands from the user interface 21. The interface 21 contains microphones, keypad, display, etc. Illustratively, DSP 17 may be any one of various DSP products such as the AT&T 1618, AT&T 1627, etc.

In this regard, the teachings of U. S. Patents 5,465,275,5,454,014, and 5,471,500 are incorporated herein by reference.

DSP 17 may illustratively, contain a DSP core, a controller, and separate unit capable of performing error correcting, illustratively, via the Viterbi decoding process.

The manner in which DSP 17 performs its functions depends upon the particular cellular standard employed. Illustratively, the device of FIG. 1 may be suitable for use with the current GSM standard, together with IS-54, IS-136, and IS-95 standards (each of which standards is incorporated herein by reference). Depending upon the particular standard for which the communicator is adapted to perform, DSP 17 performs a variety of signal processing algorithms, including speech processing, channeling coding, encrypting, de encrypting modulation, and demodulation. Each of these functions may be performed differently, depending upon the standard employed. However, programmable DSP 17 may perform any one of the above-mentioned functions upon receipt of stored program, and perhaps coefficient, information from ROM 23. A different ROM 23 may be provided for each of the above-mentioned standards, or any others. ROM 23 contains the information required to cause DSP 17 to perform the necessary functions compatible with the governing standard. Thus, in general, it may be said that ROM 23 contains whatever stored program information, coefficients, or parameters that characterize a particular standard and distinquish it from other standards. This type of information is appropriate to one standard and not to all others. Alternatively, ROM 23 may be an EPROM, EEPROM, Flash EEPROM or other programmable memory storage.

CODEC 15 may contain digital filters. Coefficients for the digital filters may be provided to the CODEC 15 via DSP 17 from ROM 23. Alternatively, a separate ROM 27 may be provided to CODEC 15 with digital filter coefficients. Functions such as decimation or interpolation may be performed by CODEC 15 utilizing programs and/or coefficients contained in either ROM 27 or ROM 23. Thus, CODEC 15 may be able to perform in a variety of standards environments.

The radio 11 contains various gain stages which may be programmable via a separate ROM 29 or which may be programmable under the control of DSP 17 via ROM 23. In addition, radio 11 may perform a direct conversion from RF to voiceband without the use of intermediate frequency. Direction for performance of such direct conversion may be provided via ROM 29 and 23.

Interface 21 may, for example, contain displays or key legends in a variety of languages. Such language captions are available via a separate ROM 31 or from ROM 23. Interface 21 may also display the appropriate standard whose information is stored in ROM 23. As discussed above, if ROM 23 (or 31) is a programmable ROM, e.g. EEPROM, the display information may be reprogrammed by the user.

The entire phone operates under the control of microcontroller 19 which may access its own ROM 25. ROM 25 may contain various information about the appropriate standard. Information for user interface 21 may be provided via the ROM 25 and ROM 31 eliminated.

Physically, ROMS 25, 31, 23, 27 and 29 may, of course, become located on single plug-in card which may be inserted into the cellular telephone. A plug-in receptacle is denoted by reference numeral 41. Some of the ROMS indicated schemetically particularly ROMS 29, 27 and 31 may be eliminated and the necessary information stored in ROM 23 associated with DSP 17 or ROM 25 associated with microcontroller 19. Alternatively, DSP 17 and microcontroller 19 may access the same ROM.

Thus, a cellular telephone user in a country which utilizes the GSM standard may purchase a simple generic telephone together with a plug-in ROM. The plug-in ROM adapts the phone to perform in the GSM environment and may even display legends and key symbols in the user's chosen language. Should the user travel to another country which utilizes a different standard, he need merely obtain a ROM suitable for the second country. Substituting the second ROM for the first enables the same cellular telephone to perform in the second country.

Alternatively, the ROM (S) may be replaced with programmable RAMS. When the user arrives at a second country with a standard incompatible with the programming of the RAM, he merely has the RAM reprogrammed, possibly by a vendor of such services, to reconfigure the RAM for the second country's standard.

Alternatively, if ROM 23 (and other ROMs if appropriate) are programmable devices such as EEPROMS (which may be physically incorporated in the DSP 17), then the EEPROM may be reprogrammed with the appropriate information when the user moves to another country or region.

As radio components become smaller and more minaturized, radio 11 may contain multiple sets of RF or baseband processing circuitry. Each set of RF or baseband processing circuitry may be appropriate for a different radio transmission environment. ROM 23 (or ROM 29 or ROM 25) may contain programmed information which directs the microcontroller to select a particular set of RF or baseband processing circuitry for a particular country or region, leaving the other unselected set of circuitry unused. The term "radio" as used herein means an apparatus capable of transmitting or receiving or interconverting RF, baseband, passband, or voiceband signals.

## Claims

1. A communication apparatus comprising:
a radio (11) capable of sending and receiving signals according to a predetermined standard;
a digital signal processor (17) operatively connected to said radio, said digital signal processor being capable of being programmed with information appropriate to various different standard;
programmable memory storage means (25, 31, 23, 27 or 29) operatively connected to said digital signal processor, said memory storage means containing information appropriate to at least one of said predetermined standards.

2. The apparatus of claim 1 in which said standard is chosen from the group consisting of GSM, IS-54, IS-136 and IS-95.

3. The apparatus of claim 1 in which said memory storage means (25, 31, 23, 27, or 29) is chosen from the group consisting of ROM, RAM, EPROM, EEPROM, and Flash EEPROM.

4. The apparatus of claim 1 in which said memory storage means (25, 31, 23, 27, or 29) may be removed from said apparatus.

5. A communication apparatus comprising:
a radio (11) capable of sending and receiving signals according to at least one predetermined standard;
a digital signal processor (17) operatively connected to said radio, said digital signal processor being capable of being programmed with information appropriate to various different standards;
receptacle means, operatively connected to said digital signal processor, for receiving a memory storage means (23), said memory storage means containing information appropriate to one of said predetermined standards.

6. The apparatus of claim 5 wherein said information appropriate to said predetermined standard includes filter coefficients.

7. The apparatus of claim 5 wherein said information appropriate to said predetermined standard includes information which enables said digital signal processor (17) to perform modulation.

8. The apparatus of claim 5 wherein said information appropriate to said predetermined standard includes information which enables said digital signal processor (17) to perform encryption.

9. The apparatus of claim 5 wherein said information appropriate to said predetermined standard includes information which enables said digital signal processor (17) to perform channel coding.

10. The apparatus of claim 5 further including a codec (15) connected to said radio said codec requiring filter coefficients and in which said memory storage means includes said filter coefficients.

11. The apparatus of claim 5 wherein said apparatus includes microcontroller (19) operatively connected to said digital signal processor (17).

12. The apparatus of claim 11 wherein said apparatus includes a user interface operating under the control of said microcontroller (13) and further including a user interface and in which said memory storage means contains information which is displayed by said user interface (21).

13. The apparatus of claim 5 wherein said information appropriate to said predetermined standard includes information which enables said digital signal processor to perform speech processing.

14. The apparatus of claim 5 wherein said radio has first and second sets of circuitry each of which is capable of sending or receiving signals according to first or second predetermined standard;
and wherein said memory storage means contains information for enabling only said first or second set of circuitry.

15. A method of communication comprising:
transmitting or receiving signals with a radio (11), said radio being capable of transmitting or receiving signals according to at least one predetermined standard, said radio being operatively connected to a receptacle for receiving a memory storage means; and prior to transmission or reception,
inserting into said receptacle a memory storage means, said memory storage means containing information appropriate to said predetermined standard.

16. A method of communication comprising:
transmitting or receiving signals with a radio (11), said radio being capable of transmitting or receiving signals according to at least one predetermined standard; said radio (11) being operatively connected to a programmable memory means; and prior to transmission or reception,
programming said memory means with information appropriate to said predetermined standard.
